# EUROPEAN PATENT APPLICATION

(11) **EP 3 934 344 A1**
(43) Date of publication of application: **05.01.2022**
(21) Application number: 19916977.2
(22) Date of filing: 14.11.2019
(51) Int. Cl.: H04W 72/04, H04W 4/46, H04W 28/04, H04W 92/18

(54) **USER DEVICE AND COMMUNICATION METHOD**

(30) Priority: 28.02.2019 JP 2019036095
(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP); WANG, Huan, Beijing, 100190 (CN)
(74) Representative: Hoffmann Eitle
(86) International application number: PCT/JP2019/044736
(87) International publication number: WO 2020/174772

(57) **Abstract**

A user apparatus includes a reception unit configured to receive repeated data channel transmissions from another user apparatus; a control unit configured to determine a resource of a feedback channel for the repeated data channel transmissions; and a transmission unit configured to transmit, to the another user apparatus, the feedback channel for the repeated data channel transmissions using the determined resource.

## Description

### TECHNICAL FIELD

The present invention relates to a user apparatus and a communication method in a wireless communication system.

### BACKGROUND ART

In LTE (Long Term Evolution) and LTE successor systems (e.g., LTE-A (LTE Advanced), NR (New Radio) (also referred to as 5G)), a D2D (Device to Device) technology in which user apparatuses communicate directly with each other without using base station apparatuses is being discussed (e.g., Non-Patent Document 1).

The D2D reduces traffic between the user apparatuses and the base station apparatuses and enables communication between the user apparatuses even when the base station apparatuses are unable to communicate during a disaster, etc. Although the 3GPP (3rd Generation Partnership Project) refers to D2D as a "sidelink," the more generic term D2D is used herein. However, in the description of embodiments described below, the sidelink is also used as needed.

The D2D communication is classified into D2D discovery for discovering other user apparatuses capable of communication and D2D communication (also referred to as D2D direct communication or direct communication between terminals, etc.) for communicating directly between user apparatuses. Hereinafter, when D2D communication and D2D discovery are not specifically distinguished, it is simply called D2D. A signal sent and received by D2D is called a D2D signal. Various use cases of V2X (Vehicle to Everything) services in NR have been discussed (e.g., Non-Patent Document 2).

### CITATION LIST

### NON-PATENT DOCUMENT

[Non-Patent Document 1] 3GPP TS 36.211 V15.3.0 (2018-09)
[Non-Patent Document 2] 3GPP TR 22.886 V15.1.0 (2017-03)

### SUMMARY OF THE INVENTION

### PROBLEM TO BE SOLVED BY THE INVENTION

In the direct communication between terminals in NR-V2X, in response to a PSSCH (Physical Sidelink Shared Channel), SFCI (Sidelink Feedback Control Information) including a HARQ response is transmitted via a PSFCH (Physical Sidelink Feedback Channel). However, it is unclear how to determine a PSFCH resource that is used in response to repeated PSSCH transmissions (PSSCH repetition).

In view of the above, it is an object of the present invention to provide a technique that enables to determine appropriately a PSFCH resource that is used in response to repeated PSSCH transmissions (PSSCH repetition) in the direct communication between terminals.

### MEANS FOR SOLVING PROBLEM

According to an embodiment of the present invention, a user apparatus is provided. The user apparatus includes a reception unit configured to receive repeated data channel transmissions from another user apparatus; a control unit configured to determine a resource of a feedback channel for the repeated data channel transmissions; and a transmission unit configured to transmit, to the another user apparatus, the feedback channel for the repeated data channel transmissions using the determined resource.

### EFFECT OF THE INVENTION

According to an embodiment of the present invention, it is possible to perform retransmission control appropriately in the direct communication between terminals.

### BRIEF DESCRIPTION OF DRAWINGS

Fig. 1 is a drawing illustrating V2X.
Fig. 2 is a drawing illustrating an example (1) of a V2X transmission mode.
Fig. 3 is a drawing illustrating an example (2) of a V2X transmission mode.
Fig. 4 is a drawing illustrating an example (3) of a V2X transmission mode.
Fig. 5 is a drawing illustrating an example (4) of a V2X transmission mode.
Fig. 6 is a drawing illustrating an example (5) of a V2X transmission mode.
Fig. 7 is a drawing illustrating an example (1) of a V2X communication type.
Fig. 8 is a drawing illustrating an example (2) of a V2X communication type.
Fig. 9 is a drawing illustrating an example (3) of a V2X communication type.
Fig. 10 is a drawing illustrating a problem to be solved.
Fig. 11 is a drawing illustrating an example of a functional structure of a base station apparatus 10 according to an embodiment of the present invention.
Fig. 12 is a drawing illustrating an example of a functional structure of a user apparatus 20 according to an embodiment of the present invention.
Fig. 13 is a drawing illustrating an example of a hardware structure of a base station apparatus 10 or a user apparatus 20 according to an embodiment of the present invention.

### MODE(S) FOR CARRYING OUT THE INVENTION

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Furthermore, in an embodiment of the present invention, the duplex method may be TDD (Time Division Duplex), FDD (Frequency Division Duplex), or other methods (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station apparatus 10 or the user apparatus 20 is configured.

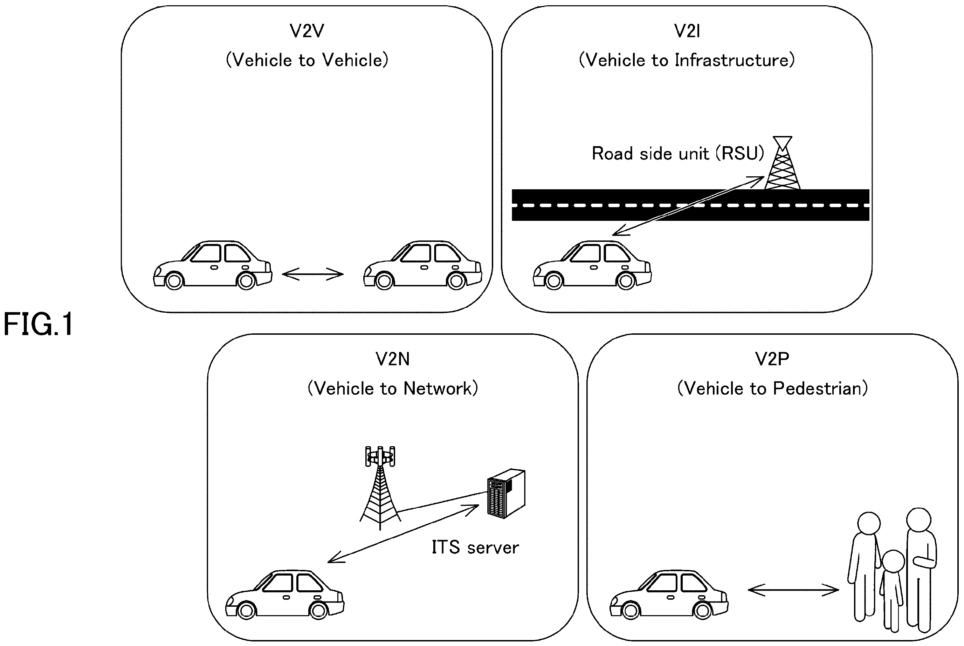

Fig. 1 is a drawing illustrating V2X. In 3GPP, enhancing D2D functions to realize V2X (Vehicle to Everything) or eV2X (enhanced V2x) has been discussed and specifications are being developed. As illustrated in Fig. 1, V2X is a part of ITS (Intelligent Transport Systems) and is a generic name (collective name) for: V2V (Vehicle to Vehicle) referring to a form of communication performed between vehicles; V2I (Vehicle to Infrastructure) referring to a form of communication performed between a vehicle and a road-side unit (RSU) that is installed on roadside; V2N (Vehicle to Network) referring to a form of communication performed between a vehicle and an ITS server; and V2P (Vehicle to Pedestrian) referring to a form of communication performed between a vehicle and a mobile terminal that is held by a pedestrian.

Further, in 3GPP, V2X using LTE/NR's cellular communication and D2D communication (communication between terminals) has been discussed. V2X using cellular communication may be referred to as cellular V2X. In NR V2X, discussions have been performed to realize higher system capacity, reduced latency, higher reliability, QoS (Quality of Service) control.

With respect to LTE/NR V2X, it is assumed that discussions may be not limited to 3GPP specifications in the future. For example, it is assumed that the following will be discussed: how to secure interoperability; how to reduce cost by implementing higher layers; how to use or how to switch multiple RATs (Radio Access Technologies); how to handle regulations of each country; how to obtain and distribute data of LTE/NR V2X platform; and how to manage and use databases.

In an embodiment of the present invention, a form of embodiment is mainly assumed in which communication apparatuses are mounted on vehicles. However, an embodiment of the present invention is not limited to such a form. For example, communication apparatuses may be terminals held by people, may be apparatuses mounted on drones or aircrafts, or may be base stations, RSUs, relay stations (relay nodes), user apparatuses capable of scheduling, etc.

It should be noted that SL (Sidelink) may be distinguished from UL (Uplink) or DL (Downlink) based on any one of, or any combination of the following 1) through 4). Furthermore, SL may be referred to as a different name.
1) resource arrangement (allocation) in the time domain
2) resource arrangement (allocation) in the frequency domain
3) synchronization signal that should be referred to (including SLSS (Sidelink Synchronization Signal))
4) reference signal that is used for path loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to user apparatuses 20, Mode 3 and Mode 4 are defined. In Mode 3, transmission resources are dynamically allocated using a DCI (Downlink Control Information) that is transmitted from a base station apparatus 10 to a user apparatus 20. Further, in Mode 3, SPS (Semi Persistent Scheduling) is enabled (available). In Mode 4, a user apparatus 20 autonomously selects transmission resources from a resource pool.

It should be noted that a slot in an embodiment of the present invention may be read as (replaced with) a symbol, a mini slot, a subframe, a radio frame, or a TTI (Transmission Time Interval). Further, a cell in an embodiment of the present invention may be read as (replaced with) a cell group, a carrier component, a BWP (bandwidth part), a resource pool, a resource, a RAT (Radio Access Technology), a system (including a wireless LAN), etc.

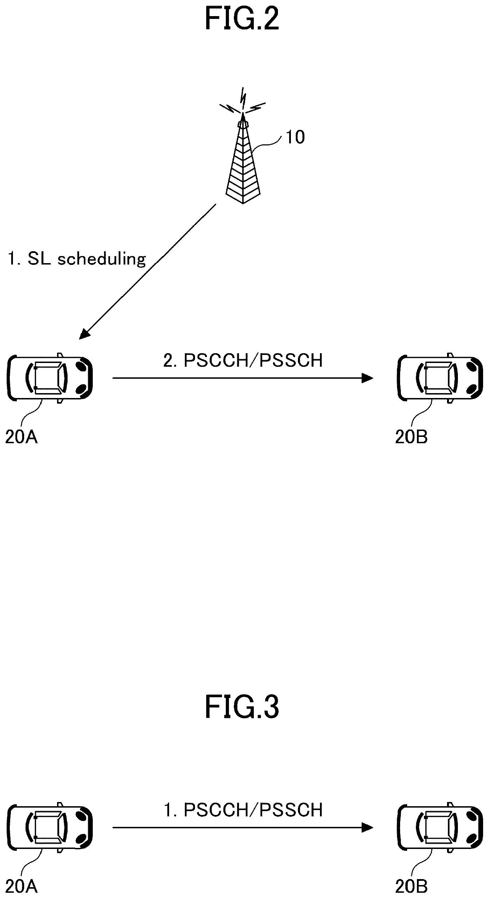

Fig. 2 is a drawing illustrating an example (1) of a V2X transmission mode. In a transmission mode of sidelink communication illustrated in Fig. 2, in step 1, a base station apparatus 10 transmits a sidelink scheduling to a user apparatus 20A. Next, the user apparatus 20A transmits PSCCH (Physical Sidelink Control Channel) and PSSCH (Physical Sidelink Shared Channel) to a user apparatus 20B based on the received scheduling (step 2). The transmission mode of sidelink communication illustrated in Fig. 2 may be referred to as a sidelink transmission mode 3 in LTE. In the sidelink transmission mode 3 in LTE, Uu based sidelink scheduling is performed. Uu is a radio interface between UTRAN (Universal Terrestrial Radio Access Network) and UE (User equipment). It should be noted that the transmission mode of sidelink communication illustrated in Fig. 2 may be referred to as a sidelink transmission mode 1 in NR.

Fig. 3 is a drawing illustrating an example (2) of a V2X transmission mode. In a transmission mode of sidelink communication illustrated in Fig. 3, in step 1, a user apparatus 20A transmits PSCCH and PSSCH to a user apparatus 20B using autonomously selected resources. The transmission mode of sidelink communication illustrated in Fig. 3 may be referred to as a sidelink transmission mode 4 in LTE. In the sidelink transmission mode 4 in LTE, the user apparatus 20A itself performs resource selection.

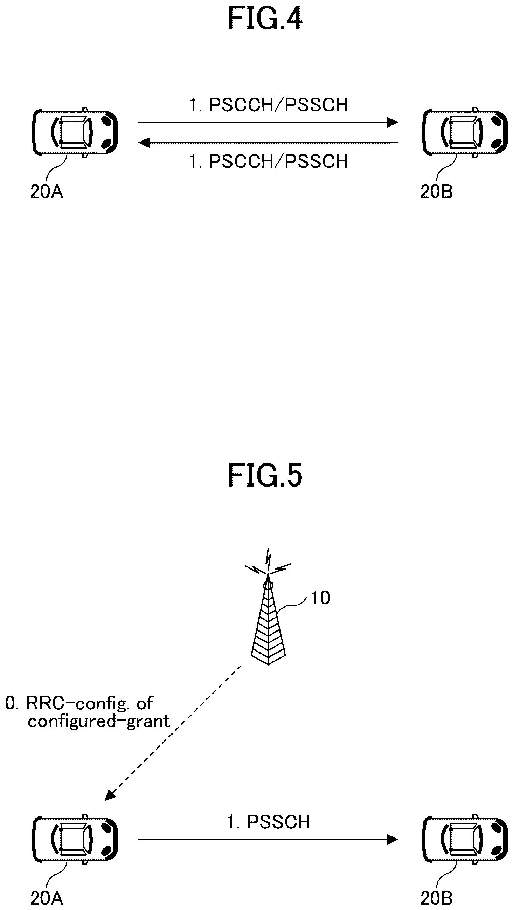

Fig. 4 is a drawing illustrating an example (3) of a V2X transmission mode. In a transmission mode of sidelink communication illustrated in Fig. 4, in step 1, a user apparatus 20A transmits PSCCH and PSSCH to a user apparatus 20B using autonomously selected resources. Similarly, the user apparatus 20B transmits PSCCH and PSSCH using autonomously selected resources (step 1). The transmission mode of sidelink communication illustrated in Fig. 4 may be referred to as a sidelink transmission mode 2a in NR. In the sidelink transmission mode 2a in NR, the user apparatus 20A, which transmits PSCCH and PSSCH itself, performs resource selection.

Fig. 5 is a drawing illustrating an example (4) of a V2X transmission mode. In a transmission mode of sidelink communication illustrated in Fig. 5, in step 0, a base station apparatus 10 transmits a sidelink scheduling grant to a user apparatus 20A via RRC (Radio Resource Control) configuration. Next, the user apparatus 20A transmits PSCCH and PSSCH to a user apparatus 20B based on the received scheduling (step 1). Alternatively, the user apparatus 20A transmits PSSCH to the user apparatus 20B based on the configuration predefined in the specification. The transmission mode of sidelink communication illustrated in Fig. 5 may be referred to as a sidelink transmission mode 2c in NR.

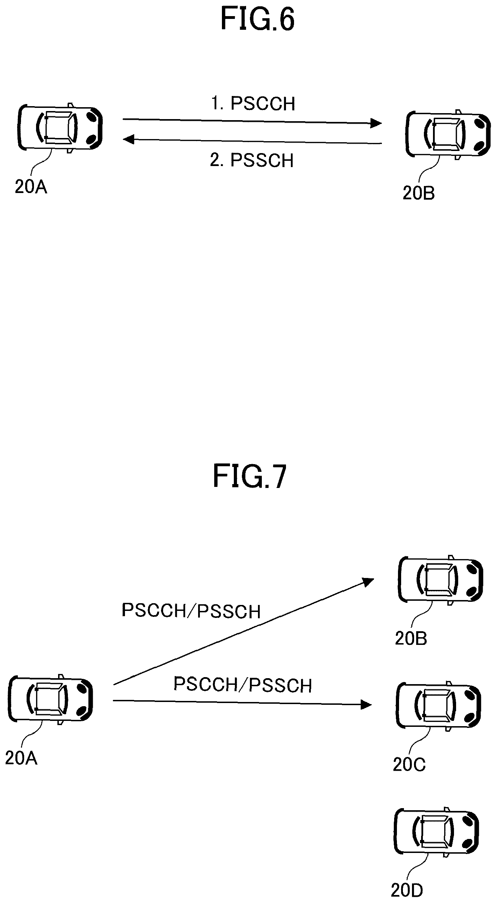

Fig. 6 is a drawing illustrating an example (5) of a V2X transmission mode. In a transmission mode of sidelink communication illustrated in Fig. 6, in step 1, a user apparatus 20A transmits a sidelink scheduling to a user apparatus 20B via PSCCH. Next, the user apparatus 20B transmits PSSCH to the user apparatus 20A based on the received scheduling (step 2). In other words, a user apparatus 20 performs scheduling for another user apparatus 20. The transmission mode of sidelink communication illustrated in Fig. 6 may be referred to as a sidelink transmission mode 2d in NR.

Fig. 7 is a drawing illustrating an example (1) of a V2X communication type. The sidelink communication type illustrated in Fig. 7 is uni-cast. The user apparatus 20A transmits PSCCH and PSSCH to user apparatuses 20. In an example illustrated in Fig. 7, the user apparatus 20A performs uni-cast (transmits PSCCH and PSSCH via uni-cast) to a user apparatus 20B, and performs uni-cast (transmits PSCCH and PSSCH via uni-cast) to a user apparatus 20C.

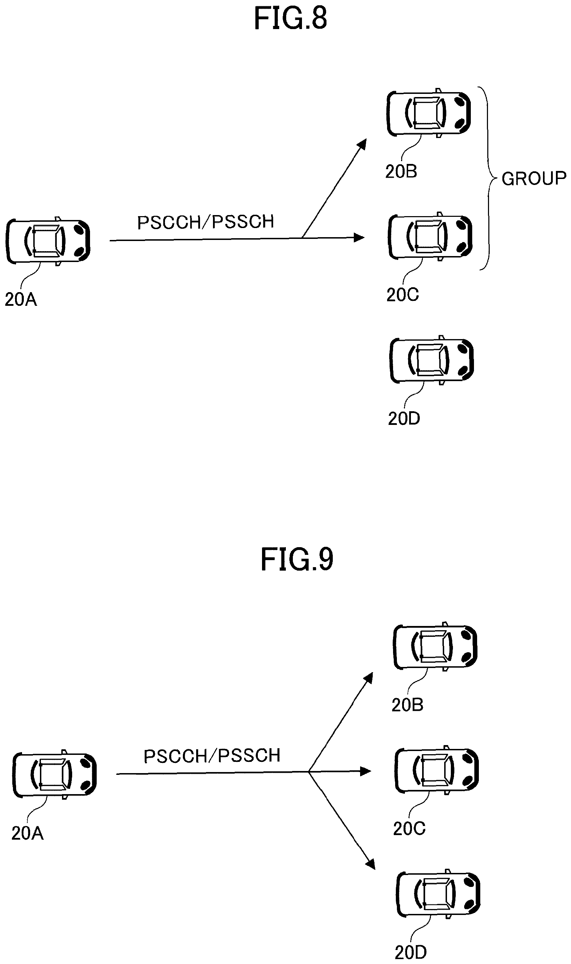

Fig. 8 is a drawing illustrating an example (2) of a V2X communication type. The sidelink communication type illustrated in Fig. 8 is group-cast. The user apparatus 20A transmits PSCCH and PSSCH to a group to which one or more user apparatuses 20 belong. In an example illustrated in Fig. 8, the group includes a user apparatus 20B and a user apparatus 20C, and the user apparatus 20A performs group-cast (transmits PSCCH and PSSCH via group-cast) to the group.

Fig. 9 is a drawing illustrating an example (3) of a V2X communication type. The sidelink communication type illustrated in Fig. 9 is broad-cast. The user apparatus 20A transmits PSCCH and PSSCH to one or more user apparatuses 20. In an example illustrated in Fig. 9, the user apparatus 20A performs broad-cast (transmits PSCCH and PSSCH via broad-cast) to a user apparatus 20B, a user apparatus 20C, and user apparatus 20D.

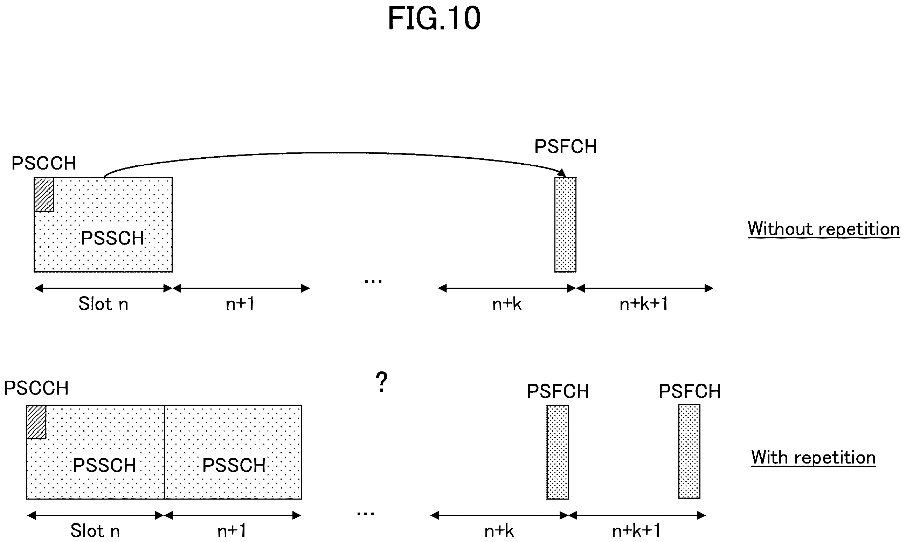

Fig. 10 is a drawing illustrating a problem to be solved.

In the direct communication between terminals in NR-V2X, SFCI (Sidelink Feedback Control Information) including a HARQ response for a PSSCH (Physical Sidelink Shared Channel) is transmitted via a PSFCH (Physical Sidelink Feedback Channel) that is associated with the PSSCH.

However, it is unclear how to determine a PSFCH resource that is used in response to repeated PSSCH transmissions (PSSCH repetition).

The present invention has been made in view of solving the above problem.

In transmission mode 1 and transmission mode 2, a gap (interval) between a PSSCH and a PSFCH that is associated with the PSSCH may be configured in advance.

In NR-V2X transmission mode 2, with respect to how to select a sidelink resource, a "dynamic scheme" and a "semi-persistent scheme" are considered. In the dynamic scheme, a sidelink PSSCH resource is selected for a single TB (Transport Block) (sidelink PSSCH resources are selected for two TBs in the case where the two TBs are supported by MIMO (Multiple Input Multiple Output) scheme).

In the semi-persistent scheme, sidelink PSSCH resources are selected for multiple TB transmissions.

A first option, a second option, a third option, and a fourth option are considered as application methods of the dynamic scheme and the semi-persistent scheme: in the first option, the dynamic scheme is applied to an initial transmission and a retransmission; in the second option, the semi-persistent scheme is applied to the initial transmission and the retransmission; in the third option, the semi-persistent scheme is applied to the initial transmission and the dynamic scheme is applied to the retransmission; and in the fourth option, the dynamic scheme is applied to the initial transmission and the semi-persistent scheme is applied to the retransmission.

It is possible for a single SCI (Sidelink Control Information) used for SL scheduling to schedule multiple PSSCH resources for a single TB (repeated transmissions).

### (Embodiment 1)

As an embodiment 1, it is considered that the user apparatus 20 uses, as a PSFCH resource for HARQ-ACK transmission in response to repeated PSSCH transmissions, a PSFCH resource that is associated with the last PSSCH of the repeated transmissions.

As advantageous effects obtained by the embodiment 1, it may be pointed out that a unique (a specific) PSFCH resource can be determined, and that sufficient processing time is obtained.

### (Embodiment 2)

As an embodiment 2, it is considered that the user apparatus 20 uses, as a PSFCH resource for HARQ-ACK transmission in response to repeated PSSCH transmissions, a PSFCH resource that is associated with the first PSSCH of the repeated transmissions.

The above-described PSFCH resource that is associated with the "first" PSSCH may be, of all repeatedly transmitted PSSCHs, the "first" PSSCH of PSSCHs that satisfy a predetermined time required between PSCCH/PSSCH and corresponding PSFCH.

"To satisfy a predetermined time required between PSCCH/PSSCH and corresponding PSFCH" means "to satisfy a time period between the last PSSCH and the PSFCH (i.e., to satisfy a time period required for processing by the user apparatus 20)".

As advantageous effects obtained by the embodiment 2, it may be pointed out that a unique (a specific) PSFCH resource can be determined, and that delay in the repeated PSSCH transmission can be reduced.

### (Embodiment 3)

As an embodiment 3, it is considered that the user apparatus 20 uses, as a PSFCH resource for HARQ-ACK transmission in response to repeated PSSCH transmissions, PSFCH resources that are associated with some PSSCHs of the repeated transmissions.

The same HARQ-ACK bit may be transmitted on all of the PSFCH resources.

Further, a different HARQ-ACK bit may be transmitted on each PSFCH resource according to the time required for decoding the PSSCH.

Further, with respect to "which resource's HARQ-ACK is transmitted", it may depend on the implementation of the user apparatus 20.

Further, a PSFCH, which satisfies a predetermined time required between PSCCH/PSSCH and corresponding PSFCH (satisfies a time period between the last PSSCH and the PSFCH (i.e., satisfies a time period required for processing by the user apparatus 20)), may be used.

### (Embodiment 4)

As an embodiment 4, it is considered that the user apparatus 20 uses, as a PSFCH resource for HARQ-ACK transmission in response to repeated PSSCH transmissions, only PSFCH resources that are associated with successfully received PSSCHs.

Further, in the case where the user apparatus 20 fails to receive the PSSCH, the user apparatus 20 may transmit NACK on a PSFCH resource that is associated with the last PSSCH resource of the repeated transmissions.

It should be noted that, in the case where ACK is received, the transmission-side user apparatus 20 may stop remaining repeated transmissions, or may continue transmissions depending on the implementation of the user apparatus 20.

According to an embodiment of the present invention, it is possible for the user apparatus 20 to determine a PSFCH resource appropriately that is used in response to repeated PSSCH transmissions (PSSCH repetition).

In other words, it is possible to perform retransmission control appropriately in the direct communication between terminals.

### (Apparatus structure)

Next, examples of functional structures of the base station apparatus 10 and the user apparatus 20 that perform the processes and operations described above will be described. The base station apparatus 10 and the user apparatus 20 each have functions for performing an embodiment of the present invention. It should be noted that the base station apparatus 10 and the user apparatus 20 each may have only a part of the functions for performing an embodiment of the present invention.

### <Base station apparatus 10>

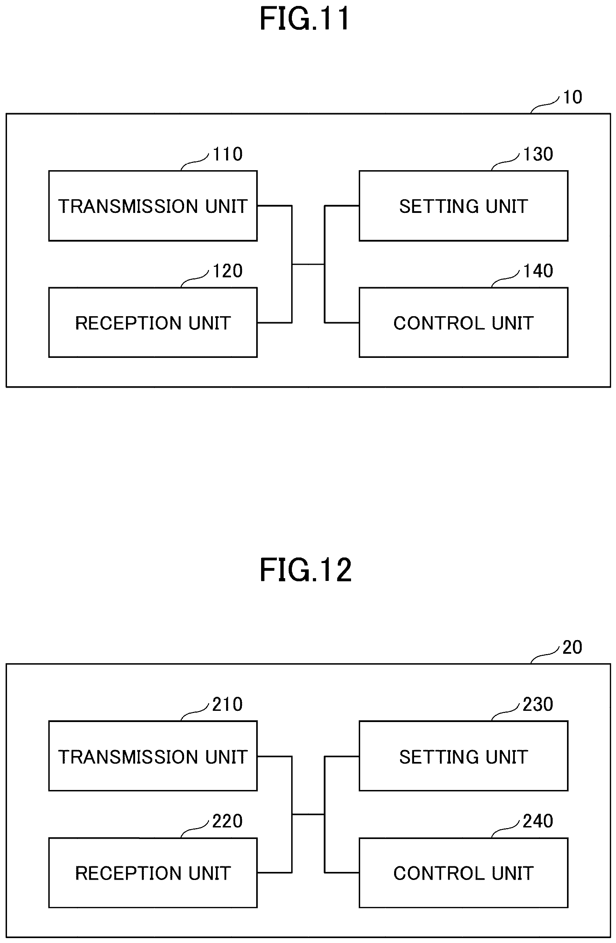

Fig. 11 is a drawing illustrating an example of a functional structure of a base station apparatus 10. As illustrated in Fig. 11, the base station apparatus 10 includes a transmission unit 110, a reception unit 120, a setting unit 130, and a control unit 140. The functional structure illustrated in Fig. 11 is merely an example. Functional divisions and names of functional units may be anything as long as it can perform operations according to an embodiment of the present invention.

The transmission unit 110 has a function for generating a signal to be transmitted to the user apparatus 20 and for transmitting the signal wirelessly. The reception unit 120 has a function for receiving various signals transmitted from the user apparatus 20 and for obtaining, for example, upper layer information from the received signals. Further, the transmission unit 110 has a function for transmitting to the user apparatus 20 NR-PSS, NR-SSS, NR-PBCH, DL/UL control signals, DL reference signals, etc.

The setting unit 130 stores, in the storage apparatus, preset setting information and various setting information items to be transmitted to the user apparatus 20, and reads them from the storage apparatus if necessary. Contents of the setting information are, for example, information related to configuration of D2D communication, etc.

The control unit 140 performs processing related to configuration used for D2D communication performed by the user apparatus 20, as described in an embodiment of the present invention. Further, the control unit 140 transmits scheduling of D2D communication to the user apparatus 20 via the transmission unit 110. The functional units related to signal transmission in the control unit 140 may be included in the transmission unit 110, and the functional units related to signal reception in the control unit 140 may be included in the reception unit 120.

### <User apparatus 20>

Fig. 12 is a drawing illustrating an example of a functional structure of a user apparatus 20. As illustrated in Fig. 12, the user apparatus 20 includes a transmission unit 210, a reception unit 220, a setting unit 230, and a control unit 240. The functional structure illustrated in Fig. 12 is merely an example. Functional divisions and names of functional units may be anything as long as it can perform operations according to an embodiment of the present invention.

The transmission unit 210 generates a transmission signal from transmission data and transmits the transmission signal wirelessly. The reception unit 220 receives various signals wirelessly and obtains upper layer signals from the received physical layer signals. Further, the reception unit 220 has a function for receiving NR-PSS, NR-SSS, NR-PBCH, DL/UL/SL control signals, or reference signals transmitted from the base station apparatus 10. Further, for example, with respect to the D2D communications, the transmission unit transmits, to another user apparatus 20, PSCCH (Physical Sidelink Control Channel), PSSCH (Physical Sidelink Shared Channel), PSDCH (Physical Sidelink Discovery Channel), PSBCH (Physical Sidelink Broadcast Channel), PSFCH (Physical Sidelink Feedback Channel), etc., and the reception unit 220 receives, from the another user apparatus 20, PSCCH, PSSCH, PSDCH, PSBCH, PSFCH, etc.

The setting unit 230 stores, in the storage apparatus, various setting information items received from the base station apparatus 10 or the user apparatus 20 via the reception unit 220, and reads them from the storage apparatus if necessary. Further, the setting unit 230 also stores preset setting information. Contents of the setting information are, for example, information related to configuration of D2D communication, etc.

The control unit 240 controls D2D communication with another user apparatus 20 as described in an embodiment of the present invention. Further, the control unit 240 performs HARQ related processing of the D2D communication. Further, the control unit 240 may perform scheduling of D2D communication for another user apparatus 20. The functional units related to signal transmission in the control unit 240 may be included in the transmission unit 210, and the functional units related to signal reception in the control unit 240 may be included in the reception unit 220.

### (Hardware structure)

In the above functional structure diagrams used for describing an embodiment of the present invention (Fig. 11 and Fig. 12), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, deciding, determining, calculating, processing, deriving, studying, researching, searching, confirming, receiving, transmitting, outputting, accessing, resolving, selecting, establishing, comparing, assuming, expecting, broadcasting, notifying, communicating, forwarding, configuring, reconfiguring, allocating, mapping, and assigning. For example, a functional block (component) that functions to transmit is called a transmitting unit or a transmitter. In either case, as described above, the realization method is not particularly limited.

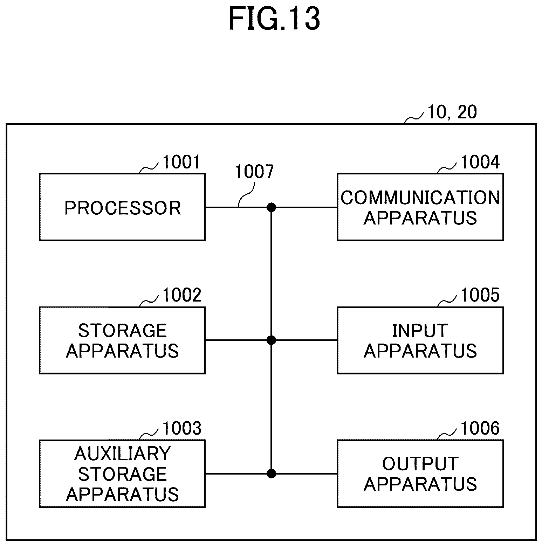

For example, the base station apparatus 10, the user apparatus 20, or the like according to an embodiment of the present disclosure may function as a computer for processing the radio communication method of the present disclosure. Fig. 13 is a diagram illustrating an example of a hardware configuration of the base station apparatus 10 and the user apparatus 20 according to an embodiment of the present disclosure. The base station device 10 and the user device 20 described above may be physically configured as a computer device including a processor 1001, a storage device 1002, an auxiliary storage device 1003, a communication device 1004, an input device 1005, an output device 1006, a bus 1007, or the like.

It should be noted that, in the following description, the term "apparatus" can be read as a circuit, device, unit, etc. The hardware configuration of the base station apparatus 10 and the user apparatus 20 may be configured to include one or more of the devices shown in the figure or may be configured without some of the devices.

Each function in the base station apparatus 10 and the user apparatus 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 operates, for example, an operating system to control the entire computer. The processor 1001 may be comprised of a central processing unit (CPU) including an interface with peripheral devices, a controller, an arithmetic unit, a register, and the like. For example, the above-described control unit 140, control unit 240, and the like may be implemented by the processor 1001.

Further, the processor 1001 reads out a program (program code), software module, data, or the like from at least one of the auxiliary storage device 1003 and the communication device 1004 to the storage device 1002 and performs various processing in accordance with the above. As a program, a program that causes a computer to execute at least a part of the operation described in the above-described embodiment is used. For example, the control unit 140 of the base station apparatus 10 illustrated in FIG. 11 may be stored in the storage device 1002 and implemented by a control program operating in the processor 1001. For example, the control unit 240 of the user device 20 illustrated in FIG. 12 may be stored in the storage device 1002 and implemented by a control program operating in the processor 1001. Although the foregoing processes have been described and executed by one processor 1001, they may be executed simultaneously or sequentially by two or more processors 1001. Processor 1001 may be implemented by one or more chips. The program may be transmitted from the network via a telecommunication line.

The storage device 1002 is a computer-readable recording medium and may be comprised of at least one of, for example, ROM (Read Only Memory), EPROM (Erasable Programmable ROM), EEPROM (Electrically Erasable Programmable ROM), RAM (Random Access Memory), and the like. The storage device 1002 may be referred to as a register, cache, main memory (main memory), or the like. The storage device 1002 can store programs (program codes), software modules, etc., executable to implement a communication method according to an embodiment of the present disclosure.

The auxiliary storage device 1003 is a computer-readable recording medium and may comprise at least one of an optical disk, such as a CD-ROM (Compact Disc ROM), a hard disk drive, a flexible disk, a magneto-optical disk (e.g., a compact disk, a digital versatile disk, a Blue-ray (registered trademark) disk), a smart card, a flash memory (e.g., a card, a stick, a keydrive), a floppy (registered trademark) disk, a magnetic strip, and the like. The storage medium described above may be, for example, a database, a server, or other suitable medium that includes at least one of a storage device 1002 and an auxiliary storage device 1003.

The communication device 1004 is a hardware (transmitting/receiving device) for performing communication between computers via at least one of a wired network and a wireless network, and is also referred to as a network device, a network controller, a network card, a communication module, or the like. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting and receiving unit, the transmission line interface, and the like may be implemented by the communication device 1004. The transmitting and receiving unit may be physically or logically isolated implementations of a transmitter and a receiver.

The input device 1005 is an input device (e.g., a keyboard, mouse, microphone, switch, button, sensor, etc.) that accepts external input. The output device 1006 is an output device (e.g., a display, speaker, LED lamp, etc.) that implements an external output. It should be noted that the input device 1005 and the output device 1006 may have an integrated configuration (for example, a touch panel).

Further, each device, such as the processor 1001 and the storage device 1002, is connected by a bus 1007 for communicating information. The bus 1007 may be implemented using a single bus or may be implemented using different buses between devices.

Further, the base station apparatus 10 and the user apparatus 20 may also include hardware, such as a microprocessor, a digital signal processor (DSP), an ASIC (Application Specific Integrated Circuit), a PLD (Programmable Logic Device), and an FPGA (Field Programmable Gate Array), all or part of each function block may be realized by the hardware. For example, the processor 1001 may be implemented using at least one of these hardware units.

### (Embodiment summary)

As described above, according to an embodiment of the present invention, a user apparatus is provided that includes a transmission unit that transmits to another user apparatus via a control channel and a data channel, a reception unit that receives a HARQ (Hybrid automatic repeat request) response to the transmission from the other user apparatus, and a control unit that transmits, to the other user apparatus, information related to a resource of a channel for receiving the HARQ response and performs retransmission control related to the transmission based on the HARQ response.

With the above configuration, it is possible for the user apparatus 20 to indicate a resource for reporting a HARQ response in the sidelink communication by using an SCI, a position of PSSCH or PSCCH, an upper layer parameter, etc. In other words, retransmission control can be performed appropriately in terminal-to-terminal direct communication.

The information related to the resource of the channel for receiving the HARQ response may specify at least one of a time domain, a frequency domain, and a code domain of the channel for receiving the HARQ response. With this configuration, the user apparatus 20 may indicate a resource for reporting a HARQ response in the sidelink communication by using an SCI.

The control unit may transmit, to the other user apparatus, information related to the resource of the channel for receiving the HARQ response via the control channel. With this configuration, it is possible for the user apparatus 20 to indicate a resource for reporting the HARQ response in the sidelink communication by using an SCI.

The control unit may further transmit, to the other user apparatus, information indicating whether a HARQ response is enabled or disabled, via the control channel. With this configuration, it is possible for the user apparatus 20 to indicate whether a HARQ response is enabled or disabled by using an SCI.

The control unit may implicitly indicate, to the other user apparatus, information related to the resource of the channel for receiving the HARQ response by associating a resource of the control channel or the data channel with a resource of the channel for receiving the HARQ response. With this configuration, it is possible for the user apparatus 20 to indicate a resource for reporting the HARQ response in the sidelink communication by a position of PSSCH or PSCCH.

The control unit may indicate, to the other user apparatus, that the resource of the channel for receiving the HARQ response is configured by an upper layer parameter by transmitting information that does not include a field indicating the resource of the channel for receiving the HARQ response via the control channel as the information related to the resource of the channel for receiving the HARQ response. With this configuration, it is possible for the user apparatus 20 to configure the resource for reporting the HARQ response in the sidelink communication by using the upper layer parameter.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, a base station apparatus 10 and a user apparatus 20 have been described by using functional block diagrams. However, the apparatuses may be realized by hardware, software, or a combination of hardware and software. The software executed by a processor included in a base station apparatus 10 according to an embodiment of the present invention and the software executed by a processor included in a user apparatus 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC signaling, MAC signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station apparatus 10 in the present specification, may be performed by an upper node in some cases. In a network including one or more network nodes including a base station apparatus 10, it is apparent that various operations performed for communicating with a user apparatus 20 may be performed by the base station apparatus 10 and/or another network node other than the base station apparatus 10 (for example, but not limited to, MME or S-GW). According to the above, a case is described in which there is a single network node other than the base station apparatus 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple user apparatuses 20 (e.g., may be referred to as D2D (Device-to-Device), V2X (Vehicle-to-Everything), etc.). In this case, the function of the base station apparatus 10 described above may be provided by the user apparatus 20. Further, the phrases "up" and "down" may also be replaced by the phrases corresponding to terminal-to-terminal communication (e.g., "side"). For example, an uplink channel, an downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputing", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, in the case where an article is added by translation, for example, "a", "an", and "the" in English, the present disclosure may include that the noun following these articles is plural.

In the present disclosure, a phrase "A and B are different" may mean "A and B are different from each other". It should be noted that the phrase may mean "A and B are different from C, respectively". The terms such as "separated" and "coupled" may be interpreted in the same way as "different".

An aspect/embodiment described in the present specification may be used independently, may be used in combination, or may be used by switching according to operations. Further, transmission of predetermined information (e.g., transmission of "it is X") is not limited to explicitly-performed transmission. The transmission of predetermined information may be performed implicitly (e.g., explicit transmission of predetermined information is not performed).

It should be noted that, in the present disclosure, sidelink communication is an example of terminal-to-terminal direct communication. PSCCH is an example of a control channel. PSSCH is an example of a data channel. PSFCH is an example of a feedback channel for transmitting a HARQ response.

While the present disclosure has been described in detail above, those skilled in the art will appreciate that the present disclosure is not limited to the embodiments described in the present disclosure. The disclosure may be implemented as modifications and variations without departing from the spirit and scope of the disclosure as defined by the claims. Accordingly, the description of the present disclosure is for illustrative purposes only and is not intended to have any restrictive meaning with respect to the present disclosure.

The present application is based on and claims priority to Japanese patent application No. 2019-036095 filed on February 28, 2019, the entire contents of which are hereby incorporated herein by reference.

### EXPLANATIONS OF LETTERS OR NUMERALS

- 10: Base station apparatus
- 110: Transmission unit
- 120: Reception unit
- 130: Setting unit
- 140: Control unit
- 20: User apparatus
- 210: Transmission unit
- 220: Reception unit
- 230: Setting unit
- 240: Control unit
- 1001: Processor
- 1002: Storage apparatus
- 1003: Auxiliary storage apparatus
- 1004: Communication apparatus
- 1005: Input apparatus
- 1006: Output apparatus

## Claims

1. A user apparatus comprising:
a reception unit configured to receive repeated data channel transmissions from another user apparatus;
a control unit configured to determine a resource of a feedback channel for the repeated data channel transmissions; and
a transmission unit configured to transmit, to the another user apparatus, the feedback channel for the repeated data channel transmissions using the determined resource.

2. The user apparatus according to claim 1,
wherein the control unit determines, as a feedback channel resource for responding to repeated data channel transmissions, a feedback channel resource that is associated with a last data channel of the repeated transmissions.

3. The user apparatus according to claim 1,
wherein the control unit determines, as a feedback channel resource for responding to repeated data channel transmissions, a feedback channel resource that is associated with a first data channel of the repeated transmissions.

4. The user apparatus according to claim 1,
wherein the control unit determines, as a feedback channel resource for responding to repeated data channel transmissions, a feedback channel that is associated with the repeated data channel transmissions.

5. The user apparatus according to claim 1,
wherein the control unit determines, as a feedback channel resource for responding to repeated data channel transmissions, a feedback channel that is associated with a successfully received data channel.

6. A communication method of a user apparatus, the method comprising:
receiving repeated data channel transmissions from another user apparatus;
determining a resource of a feedback channel for the repeated data channel transmissions; and
transmitting, to the another user apparatus, the feedback channel for the repeated data channel transmissions using the determined resource.
